# EUROPEAN PATENT APPLICATION

(11) **EP 4 550 900 A1**
(43) Date of publication of application: **07.05.2025**
(21) Application number: 23830407.5
(22) Date of filing: 29.06.2023
(51) Int. Cl.: H04W 56/00

(54) **METHOD EXECUTED BY MEANS OF USER EQUIPMENT, AND USER EQUIPMENT**

(30) Priority: 30.06.2022 CN 202210776542
(71) Applicant: Sharp Kabushiki Kaisha, Sakai City, Osaka 590-8522 (JP)
(72) Inventor: LIU, Renmao, Shanghai 201206 (CN); ZHANG, Chongming, Shanghai 201206 (CN)
(74) Representative: Müller Hoffmann & Partner
(86) International application number: PCT/CN2023/103849
(87) International publication number: WO 2024/002239

(57) **Abstract**

The present invention provides a method executed by means of a user equipment, and a user equipment. The method includes the following steps: when a timer associated with a first TAG expires, maintaining an N_{TA} value of the first TAG; for one or more serving cells belonging to the first TAG, the UE determining whether the serving cell also belongs to another TAG at the same time; and if the serving cell also belongs to another TAG and a timer associated with the other TAG is still running, the UE performing no operation; or if the serving cell also belongs to another TAG and a timer associated with the other TAG has stopped running, or if the serving cell belongs to only the first TAG, the UE performing a corresponding operation.

## Description

### TECHNICAL FIELD

The present invention relates to the technical field of wireless communications. More specifically, the present invention relates to a method executed by means of a user equipment, and a corresponding user equipment.

### BACKGROUND ART

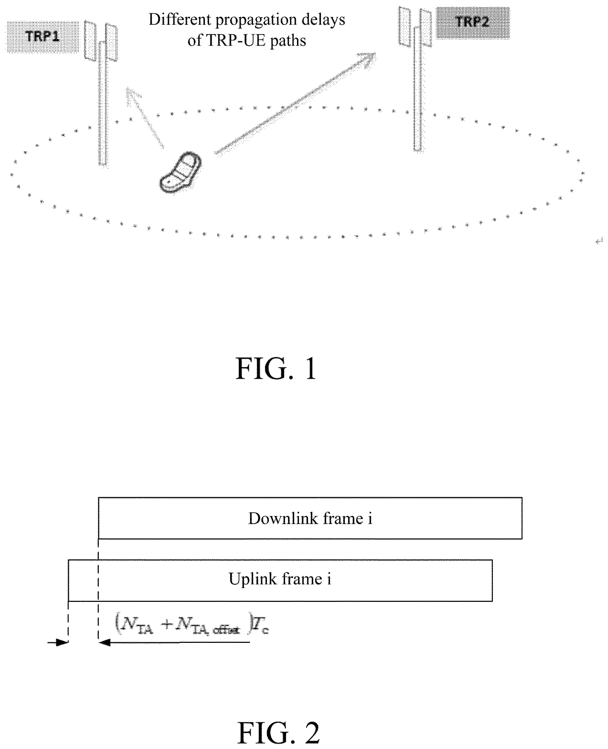

In order to further enhance the performance of uplink transmission and reception in NR technology, the 3rd Generation Partnership Project (3GPP) intends to study uplink transmission in the case of a plurality of transmit/receive points (TRPs). In a serving cell, more than one transmit/receive point (TRP) may be arranged, and each TRP provides a service to the same UE, as shown in FIG. 1. Due to different physical distances between different TRPs and the UE, propagation delays are different, so that values of timing advances adopted by the UE for transmission of the different TRPs are different. In the prior art, a UE interacts with only one TRP in one serving cell, and maintains one TA value. With the introduction of a plurality of TRPs, how a UE maintains a plurality of TA values is an issue to be addressed.

### SUMMARY OF THE INVENTION

In order to address the above issue, the present invention provides a method executed by means of a user equipment, and corresponding user equipment, so that even in the case that a UE is configured with a plurality of TRPs in one serving cell, the UE can also effectively maintain a plurality of TA values, thereby performing uplink transmission reliably in the case of the plurality of TRPs.

According to an aspect of the present invention, provided is a method executed by means of a user equipment, being a method performed during uplink transmission performed by a user equipment (UE) by using one or more transmit/receive points (TRPs) in a serving cell, wherein each serving cell is sorted into a timing advance group (TAG), serving cells having the same timing advance N_{TA} belonging to the same TAG, each TAG having its own timer for controlling an effective time of uplink synchronization of a serving cell belonging to the TAG, and the method comprising the following steps:
when a timer associated with a first TAG expires, the UE performing the following operations:
maintaining an N_{TA} value of the first TAG;
for one or more serving cells belonging to the first TAG, the UE determining whether the serving cell also belongs to another TAG at the same time,
   if the serving cell also belongs to another TAG and a timer associated with the other TAG is still running, the UE performing no operation,
   if the serving cell also belongs to another TAG and a timer associated with the other TAG has stopped running, or if the serving cell belongs to only the first TAG, the UE performing at least one of the following operations:
      flushing all HARQ buffers of the serving cell;
      if the serving cell is configured with a PUCCH, notifying an RRC layer of the UE to release the PUCCH;
      if the serving cell is configured with an SRS, notifying the RRC layer of the UE to release the SRS;
      clearing configured downlink assignments and configured uplink grants; and
      clearing a PUSCH resource for semi-persistent CSI reporting.

In the above method executed by means of a user equipment, preferably,
a PUCCH resource configured for the serving cell, the SRS, the downlink assignment, the uplink grant, or the PUSCH resource for semi-persistent CSI reporting is configured on the basis of a TRP.

The above method executed by means of a user equipment, preferably, further comprises the following step:
if the serving cell also belongs to another TAG and a timer associated with the other TAG is still running, the UE performing at least one of the following operations:
if the serving cell is configured with a PUCCH and the PUCCH is associated with the first TAG or a first TRP, notifying the RRC layer of the UE to release the PUCCH associated with the first TAG or the first TRP;
if the serving cell is configured with an SRS and the SRS is associated with the first TAG or the first TRP, notifying the RRC layer of the UE to release the SRS associated with the first TAG or the first TRP;
clearing a configured downlink assignment associated with the first TAG or the first TRP, and clearing a configured uplink grant associated with the first TAG or the first TRP; and
clearing a configured PUSCH resource associated with the first TAG or the first TRP and used for semi-persistent CSI reporting.

The above method executed by means of a user equipment, preferably, further comprises the following step:
if the serving cell also belongs to another TAG and a timer associated with the other TAG is still running, the UE performing at least one of the following operations:
if the serving cell is configured with a PUCCH and the PUCCH is associated with the first TAG or the first TRP, the UE suspending or pausing use of the PUCCH associated with the first TAG or the first TRP;
if the serving cell is configured with an SRS and the SRS is associated with the first TAG or the first TRP, the UE suspending or pausing use of the SRS associated with the first TAG or the first TRP;
the UE suspending or pausing use of a configured downlink assignment associated with the first TAG or the first TRP, and suspending or pausing use of a configured uplink grant associated with the first TAG or the first TRP; and
the UE suspending or pausing use of a configured PUSCH resource which is associated with the first TAG or the first TRP and is used for semi-persistent CSI reporting.

In the above method executed by means of a user equipment, preferably,
if there is a special cell among serving cells associated with a TAG, the TAG is a primary timing advance group (PTAG), wherein the special cell is a primary cell of a master cell group (MCG) or a primary cell of a secondary cell group (SCG).

The above method executed by means of a user equipment, preferably, further comprises the following step:
if the special cell is configured with a plurality of TAGs, the TAGs being all PTAGs;
when a timer associated with a first PTAG expires, the UE performing the following operations:
the UE determining whether there are a plurality of PTAGs,
   if the UE is not configured with a plurality of PTAGs, or if the UE is configured with a plurality of PTAGs, but timers associated with other PTAGs have stopped running, the UE performing at least one of the following operations for all serving cells:
   flushing HARQ buffers of all the serving cells;
   notifying the RRC layer of the UE to release configured PUCCHs of all the serving cells;
   notifying the RRC layer of the UE to release configured SRSs of all the serving cells;
   clearing configured downlink assignments and configured uplink grants; and
   clearing a PUSCH resource for semi-persistent CSI reporting;
if the UE is configured with a plurality of PTAGs, but at least one of the timers associated with the other PTAGs is still running, the first PTAG being the first TAG.

The above method executed by means of a user equipment, preferably, further comprises the following step:
if the special cell is configured with a plurality of TAGs, only one of the TAGs being a PTAG, and the other TAGs being primary secondary timing advance groups (PSTAGs),
if an expired timer is associated with the PTAG, the UE performing at least one of the following operations for all serving cells:
   flushing HARQ buffers of all the serving cells;
   notifying the RRC layer of the UE to release configured PUCCHs of all the serving cells;
   notifying the RRC layer of the UE to release configured SRSs of all the serving cells;
   clearing configured downlink assignments and configured uplink grants; and
   clearing a PUSCH resource for semi-persistent CSI reporting,
if an expired timer is associated with a PSTAG, the PSTAG is the first TAG.

The above method executed by means of a user equipment, preferably, further comprises the following step:
if the special cell is configured with a plurality of TAGs, only one of the TAGs being a PTAG, and the other TAGs being primary secondary timing advance groups (PSTAGs),
if an expired timer is associated with the PTAG, the UE performing the following operations:
the UE determining whether there is a PSTAG,
if there is a PSTAG, the UE further determining whether a timer associated with the PSTAG is still running,
   if the timer associated with the PSTAG is still running, the PTAG being the first TAG;
if there is no PSTAG, or if there is a PSTAG but a timer associated with the PSTAG has stopped running, the UE performing at least one of the following operations for all serving cells:
   flushing HARQ buffers of all the serving cells;
   notifying the RRC layer of the UE to release configured PUCCHs of all the serving cells;
   notifying the RRC layer of the UE to release configured SRSs of all the serving cells;
   clearing configured downlink assignments and configured uplink grants; and
   clearing a PUSCH resource for semi-persistent CSI reporting.

The above method executed by means of a user equipment, preferably, further comprises the following step:
if an expired timer is associated with the PSTAG, the UE performing the following operations:
the UE further determining whether a timer associated with the PTAG is still running,
if the timer associated with the PTAG is still running, the PSTAG being the first TAG;
if the timer associated with the PTAG has stopped running, the UE performing at least one of the following operations for all serving cells:
   flushing HARQ buffers of all the serving cells;
   notifying the RRC layer of the UE to release configured PUCCHs of all the serving cells;
   notifying the RRC layer of the UE to release configured SRSs of all the serving cells;
   clearing configured downlink assignments and configured uplink grants; and
   clearing a PUSCH resource for semi-persistent CSI reporting.

According to another aspect of the present invention, provided is a user equipment, comprising:
a processor; and
a memory, having instructions stored therein,
the instructions, when run by the processor, performing the method described above.

According to the method executed by means of a user equipment and the corresponding user equipment in the present invention, even in the case that a UE is configured with a plurality of TRPs in one serving cell, the UE can also effectively maintain a plurality of TA values, thereby performing uplink transmission reliably in the case of the plurality of TRPs.

### BRIEF DESCRIPTION OF THE DRAWINGS

FIG. 1 is a schematic diagram showing uplink transmission in the case of a plurality of transmit/receive points (TRPs).
FIG. 2 is a schematic diagram showing a timing advance.
FIG. 3 is a flowchart showing a 4-step random access procedure.
FIG. 4 is a flowchart showing a 2-step random access procedure.
FIG. 5 is a flowchart showing a method executed by means of a user equipment according to an embodiment of the present invention.
FIG. 6 is a simplified structural block diagram of a user equipment according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment;
NR: New Radio;
LTE: Long Term Evolution;
eLTE: enhanced Long Term Evolution;
RRC: Radio Resource Control (layer);
MAC: Medium Access Control (layer);
MAC CE: MAC Control Element;
PHY: physical layer;
RB: radio bearer;
DRB: Data Radio Bearer;
SRB: Signaling Radio Bearer;
TCI: Transmission Configuration Indicator;
RSRP: Reference Signal Received Power;
PRACH: Physical Random Access Channel;
RA: Random Access;
RAR: Random Access Response;
TRP: Transmit/Receive Point;
SS: Synchronization Signal;
PBCH: Physical Broadcast Channel;
SSB: SS/PBCH Block;
CSI-RS: Channel State Information-Reference Signal;
HARQ: Hybrid Automatic Repeat Request;
PUCCH: Physical Uplink Control Channel;
SRS: Sounding Reference Signal;
CSI: Channel State Information;
PUSCH: Physical Uplink Shared Channel.

Hereinafter, a description will be given of related art of the present invention.

### Random Access Procedure

Random access procedures include a 4-step random access procedure and a 2-step random access procedure.

### 4-step Random Access Procedure

First, the 4-step random access procedure in the prior art will be described. The 4-step random access procedure performed by a UE typically includes the following steps.

Step 0: the UE selecting a random access resource for random access. In this process,
- the UE selecting a preamble for transmission, and setting an index corresponding to the selected preamble to the value of a parameter PREAMBLE_INDEX; and
- determining a next PRACH occasion available for transmission from a plurality of PRACH occasions.

Step 1: the UE transmitting the selected preamble on the determined PRACH occasion.

Step 2: the UE receiving a random access response (RAR) transmitted from a base station side.

If the RAR carries the preamble index id corresponding to the preamble transmitted by the UE in step 1, the UE can determine that the RAR is transmitted to the UE.

Such a RAR carries an uplink (UL) grant and a timing advance command.

The UL grant indicates a PUSCH resource for transmitting Msg3. The index value *T_{A}* used to control the amount of timing adjustment is indicated in the timing advance command.

Upon receiving the RAR, the UE applies the timing advance command to acquire a valid TA value. If the random access procedure is a non-contention based random access procedure, for example, a dedicated preamble is provided in the PDCCH order, the random access procedure is considered to be successfully completed at this point. If not, the UE continues to perform the following steps including processing the UL grant carried in the RAR and indicating the same to a lower layer. If this is the first time the UE successfully receives the above RAR, the UE obtains a MAC PDU for transmission from a multiplexing and assembly entity and stores the same in a buffer (MSG3buffer) of Msg3.

Step 3: the UE transmitting Msg3 on a PUSCH resource indicated by a UL grant.

The UE includes identification information for contention resolution in this Msg3.

Step 4: the UE receiving Msg4 transmitted from the base station side.

If Msg4 carries the identification information included by the UE in Msg3, the UE considers that a contention has been resolved and the random access procedure has been successfully completed.

The above random access procedure, in which the UE undergoes a message transmission procedure of steps 1 to 4, is therefore referred to as a "4-step random access" (4-step RA) procedure.

### 2-step Random Access Procedure

Next, the "2-step random access procedure" involved in the present invention will be described in detail. The "2-step random access procedure" in the present invention typically includes the following steps.

Step 0: the UE selecting a random access resource for random access. In this process,
- the UE selecting a preamble for transmission, and setting an index corresponding to the selected preamble to the value of a parameter PREAMBLE_INDEX;
- determining a next PRACH occasion available for transmission from a plurality of PRACH occasions; and
- determining a PUSCH resource corresponding to the preamble.

Step 1: the UE transmitting a message (MSG) A to a base station.

The message A includes a preamble and a message A payload.

The preamble is transmitted on a PRACH, and the message A payload is transmitted on a PUSCH. The message A payload is packaged into a MAC PDU and is transmitted on the PUSCH. The message A payload may carry an RRC message, for example, an RRC connection setup request message, and may further carry a user data packet.

Step 2: the UE receiving a message (MSG) B transmitted by the base station.

The message B carries information for contention resolution.

In terms of the chronological order, the UE first transmits the MSGA including the preamble and the message A payload. The UE receives the message B transmitted by the base station. The message B is response information of the network side/the base station to the MSG A transmitted by the UE. The MSG B may carry an Absolute Timing Advance Command MAC CE, which is used to acquire a timing advance.

In addition, when the UE determines a transmission occasion that can be used for the message A, the UE obtains a MAC PDU for transmission from a multiplexing and assembly entity, and stores the obtained MAC PDU in a buffer.

Since the message A includes the preamble transmitted on the PRACH and the message A load information transmitted on the PUSCH, for example, the following cases may be used as the transmission occasion that can be used for the message A, and include: the UE determines a PUSCH occasion that can be used to transmit the message A payload; alternatively, the UE determines a next available PRACH occasion, and the PRACH occasion is used to transmit the preamble; alternatively, the UE selects a preamble, and the selected preamble is used for the current random access procedure; alternatively, the preamble selected by the UE is associated with the PUSCH or with the PUSCH occasion.

### Timing Advance N_{TA}

A timing advance N_{TA} may be used to calculate a timing advance between downlink and uplink.

As shown in FIG. 2, in order to maintain uplink synchronization, UE needs to start transmission of an uplink frame i within a period of time before a starting position of a downlink frame i. The period of time may be represented by the timing advance value T_{TA}, T_{TA} = (N_{TA} + N_{TA, offset}) * T_{c}, where T_{c} is a time parameter related to a carrier frequency.

A timing advance command and an absolute timing advance command MAC CE include an index value, and the index value is denoted as T_{A}, and is used to calculate N_{TA}. Upon receiving the timing advance command included in the random access response or receiving the absolute timing advance command MAC CE carried in the MSG B, the UE may calculate the value of N_{TA} according to T_{A} therein. That is, T_{A} indirectly indicates the value of N_{TA}.

It can be seen from the above formula that the timing advance N_{TA} can be used to determine the timing advance value T_{TA}, so that the two terms can be used interchangeably herein, and the timing advance value T_{TA} can be simply referred to as the TA value.

### Timing Advance Group (TAG)

In the prior art, in order to maintain uplink (UL) time alignment, each serving cell is sorted into a TAG, and serving cells having the same timing advance belong to the same TAG. In order to manage the validity of the TA value, each TAG may have its own timer timeAlignmentTimer used to control an effective time of uplink synchronization of serving cells belonging to the TAG. When the TA value is updated, timeAlignmentTimer of the corresponding TAG may be started or restarted. When timeAlignmentTimer of a TAG expires, it is indicated that uplink of serving cells belonging to the TAG is no longer synchronized.

In a multi-TRP scenario, one serving cell may include more than one TRP, and each TRP has a timing advance corresponding thereto, so that in an implementation manner, one serving cell may belong to more than one TAG. For example, there may be two TAGs, and each TAG corresponds to one TRP, that is, each TRP has a TAG associated therewith. Similarly, each TAG may have its own timeAlignmentTimer.

In another implementation manner, one serving cell belongs to one TAG, but the TAG has more than one TA value. For example, one TAG may have at least two TA values, and each TA value corresponds to or is associated with one TRP. Similarly, each TA may have its own timeAlignmentTimer, so that the TAG may have a plurality of timeAlignmentTimer.

Herein, the TA may be managed in any one of the above manners.

### SS/PBCH Block SSB

When an NR system operates in a high frequency band, a base station usually cannot simultaneously transmit a plurality of beams covering an entire cell, so that a beam sweeping technique is introduced in the NR system to address the issue of cell coverage.

The so-called beam sweeping means that the base station performs transmission in only one or several beam directions at a certain time, and transmits different beams at a plurality of times to cover all directions required in the entire cell. An SS/PBCH block set is designed for beam sweeping, and is used to transmit, in each beam direction, a primary synchronization signal, a secondary synchronization signal, and a physical broadcast channel required by UE to search for a cell, and these signals constitute an SS/PBCH block (SSB). The SS/PBCH block set is a set of a plurality of SS/PBCH blocks within a certain time period. In the same period, each SS/PBCH block corresponds to one beam direction, and beam directions of SS/PBCH blocks in an SS/PBCH block set cover an entire cell.

In a multi-TRP scenario, it can be considered that one TRP corresponds to some SSBs in an SS/PBCH block set, and another TRP corresponds to some SSBs in the set. The SSBs corresponding to the two TRPs constitute the full SS/PBCH block set, that is, covering an entire cell. Therefore, in a random access procedure, when selecting a random access resource, the UE needs to first determine a beam direction of random access, that is, to determine an SSB.

In a multi-TRP scenario, alternatively, one primary TRP corresponds to all SSBs of an SS/PBCH block set, thereby covering an entire cell. In addition, one or more secondary TRPs are present, and beam directions corresponding thereto may be some SSBs, or more specifically, may be represented by CSI-RSs, i.e., beam directions corresponding to CSI-RSs.

Therefore, it can be considered that the TRP and the SSB or the CSI-RS have a correspondence relationship therebetween or are associated with each other.

Such a correspondence relationship may be directly indicated in RRC configuration information. For example, sequence numbers of a group of SSBs are configured for one TRP, so that these SSBs are associated with the TRP. As another example, a group of CSI-RSs are configured for one TRP, so that these CSI-RSs are associated with the TRP. Such a correspondence relationship may also be indicated indirectly, and for example, may be indicated by TCI states.

The UE detects a PDCCH in a configured search space, which is referred to as monitoring the PDCCH. Configuration information of each search space includes information about a control resource set (ControlResourceSet, CORESET) used in the search space. The control resource set provides frequency domain and time domain resource blocks. Each control resource set is associated with a series of TCI states. Information about at least one SSB or CSI-RS is included in each TCI state. A control resource set for the same search space may be indicated by coresetPoolIndex, and the value of coresetPoolIndex is the number of the control resource set. A control resource set with the number of 0 may correspond to a first TRP, and a control resource set with the number of 1 may correspond to a second TRP, and so on. Therefore, the configuration of the TCI state of the resource set may correspond to the TRP corresponding to the resource set, so that the TRP and the SSB or the CSI-RS form a correspondence relationship.

### 4-step Random Access Procedure (4-step RA)

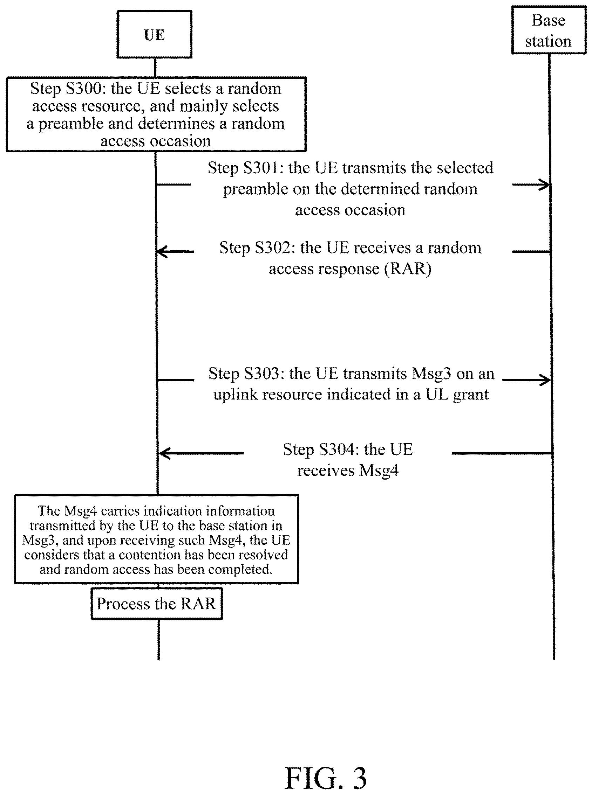

Description is provided below with reference to the accompanying drawings. Specifically, as shown in FIG. 3, a UE performs a 4-step random access procedure including the following steps:
Step S300: the UE selecting a random access resource for random access. In this process,
   - the UE selecting a preamble for transmission, and setting an index corresponding to the selected preamble to the value of a parameter PREAMBLE_INDEX; and
   - determining a next PRACH occasion available for transmission from a plurality of PRACH occasions.
Step S301: the UE transmitting the selected preamble on the determined PRACH occasion.
Step S302: the UE receiving a random access response (RAR) transmitted from a base station side.

If the RAR carries the preamble index id corresponding to the preamble transmitted by the UE in step S301, the UE can determine that the RAR is transmitted to the UE.

Such a RAR may carry a UL grant indicating a PUSCH resource for transmitting Msg3.

The RAR may further carry a timing advance command (a timing advance adjustment indication) including the index value T_{A} used to control the amount of timing adjustment, and the value is used to index or corresponds to a valid uplink synchronization timing advance (TA). Upon receiving such a timing advance command, the UE uses a timing advance indicated therein for following uplink transmission.

Upon receiving the RAR, the UE applies the timing advance command to acquire a valid TA value. If the random access procedure is a non-contention based random access procedure, for example, a dedicated preamble is provided in the PDCCH order, the random access procedure is considered to be successfully completed at this point. If not, the UE continues to perform the following steps.

Upon receiving the RAR, the UE processes the UL grant carried in the RAR, and indicates the same to a lower layer. If this is the first time the UE successfully receives the above RAR, the UE obtains a MAC PDU for transmission from a multiplexing and assembly entity and stores the same in a buffer (MSG3buffer) of Msg3.

If the UE does not receive the RAR within a predetermined time, the UE increases the value of a variable PREAMBLE_TRANSMISSION_COUNTER by 1, and the initial value of the variable is 0. If PREAMBLE_TRANSMISSION_COUNTER = preambleTransMax + 1, the UE does not consider that the random access procedure is successfully completed, and may indicate a random access problem to an upper layer. The variable PREAMBLE_TRANSMISSION_COUNTER is used to record the number of times the preamble is transmitted. The parameter preambleTransMax is a pre-configured value, the value of which indicates the maximum number of times the preamble is allowed to be transmitted.

Step S303: the UE transmitting a message on a PUSCH resource indicated by a UL grant.

The UE includes identification information for contention resolution in this Msg3.

Step S304: the UE receiving Msg4 transmitted from the base station side.

If Msg4 carries the identification information included by UE in Msg3, the UE considers that a contention has been resolved and the random access procedure has been successfully completed.

If the UE does not receive Msg4 within a predetermined time, the UE increases the value of the variable PREAMBLE_TRANSMISSION_COUNTER by 1, and the initial value of the variable is 0. If PREAMBLE_TRANSMISSION_COUNTER = preambleTransMax + 1, the UE does not consider that the random access procedure is successfully completed, and may indicate a random access problem to an upper layer.

The above random access procedure, in which the UE undergoes a message transmission procedure of steps S301 to S304, is therefore referred to as a "4-step random access" (4-step RA) procedure.

The 4-step random access procedure may also be referred to as a type-1 layer 1 random access (type 1 L1 RA) procedure. From the viewpoint of the physical layer (also referred to as layer 1), the type 1 L1 RA procedure includes at least transmission of a random access preamble (or transmission of Msg1) on the PRACH and transmission/reception of a random access response message. The transmission of the random access response message is scheduled by the PDCCH and performed on the PDSCH. In addition, the type 1 L1 RA procedure may further include a PUSCH scheduled by an uplink grant carried in a random access response and a following PDSCH used for contention resolution.

### 2-step Random Access Procedure (2-step RA)

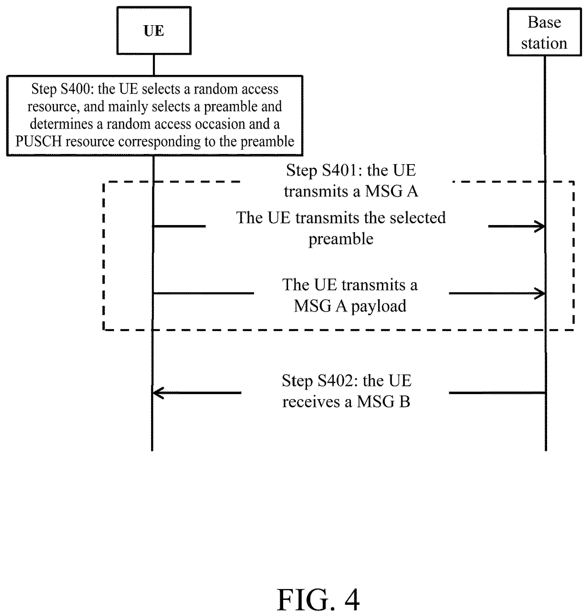

Description is provided below with reference to the accompanying drawings. Specifically, as shown in FIG. 4, a 2-step random access procedure includes the following steps:
Step S400: the UE selecting a random access resource for random access. In this process,
   - the UE selecting a preamble for transmission, and setting an index corresponding to the selected preamble to the value of a parameter PREAMBLE_INDEX;
   - determining a next PRACH occasion available for transmission from a plurality of PRACH occasions; and
   - determining a PUSCH resource corresponding to the preamble.
Step S401: the UE transmitting a message (MSG) A to a base station.

The message A includes a preamble and a message A payload.

The preamble is transmitted on a PRACH, and the message A payload is transmitted on a PUSCH. The message A payload is packaged into a MAC PDU and is transmitted on the PUSCH. When the UE determines an occasion for transmitting the message A, if this is the first time the UE transmits the MSG A, the UE obtains a MAC PDU for transmission from a multiplexing and assembly entity and stores the same in a buffer (MSGA buffer) of MSG A.

Step S402: the UE receiving a message (MSG) B transmitted by the base station.

The message B carries information for contention resolution.

Similar to the 4-step random access procedure, if the UE does not receive the MSG B within a predetermined time, the UE increases the value of the variable PREAMBLE_TRANSMISSION_COUNTER by 1, and the initial value of the variable is 0. If PREAMBLE_TRANSMISSION_COUNTER = preambleTransMax + 1, the UE does not consider that the random access procedure is successfully completed, and may indicate a random access problem to an upper layer. The variable PREAMBLE_TRANSMISSION_COUNTER is used to record the number of times the preamble is transmitted. The parameter preambleTransMax is a pre-configured value, the value of which indicates the maximum number of times the preamble is allowed to be transmitted.

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

Specific embodiments are provided below to describe a processing method of the present invention.

### Embodiment 1

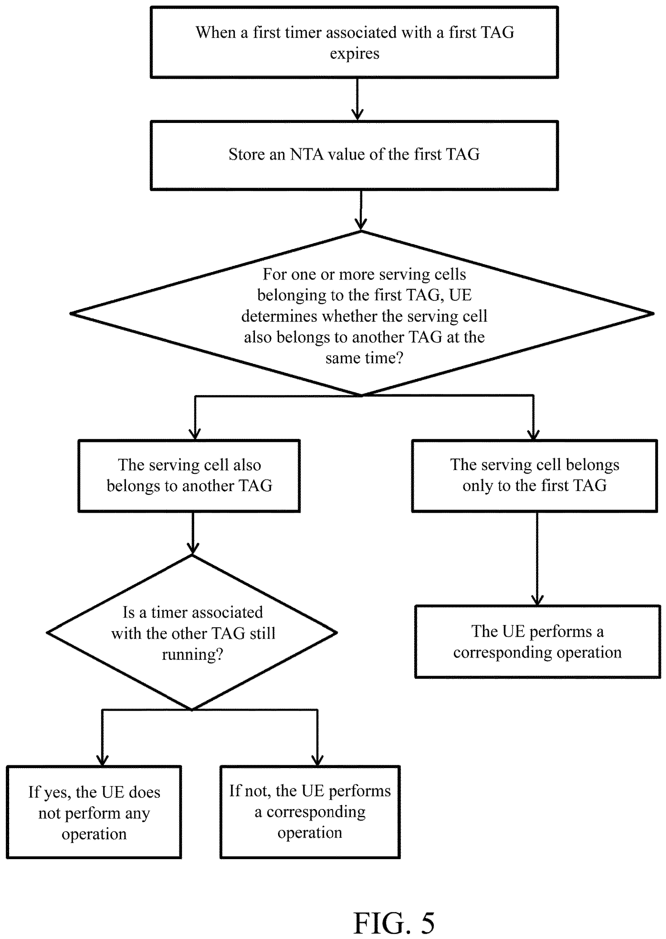

This embodiment provides a method executed by means of a user equipment, being a method performed in uplink transmission performed by a UE by using one or more TRPs in a serving cell, wherein each serving cell is sorted into a TAG. A basis for partitioning may be that serving cells having the same N_{TA} belong to the same TAG, and each TAG having its own timer for controlling an effective time of uplink synchronization of a serving cell belonging to the TAG. As shown in FIG. 5, the method includes the following steps:
when a first timer associated with a first TAG expires, the UE performing the following operations:
maintaining an N_{TA} value of the first TAG;
for one or more serving cells belonging to the first TAG, the UE determining whether the serving cell also belongs to another TAG at the same time,
if the serving cell also belongs to another TAG and a timer associated with the other TAG is still running, the UE performing no operation,
if the serving cell also belongs to another TAG and a timer associated with the other TAG has stopped running, or if the serving cell belongs to only the first TAG, the UE performing a corresponding operation.

Specifically, for a timer timeAlignmentTimer-1 associated with a TAG (denoted as TAG-1), when the timer expires, the UE may perform the following operations:
1, the UE maintaining an N_{TA} value of TAG-1; and
2, for one or more serving cells belonging to TAG-1, the UE determining whether the serving cell is configured with a plurality of TAGs (for example, configured with both TAG-1 and TAG-2) or the serving cell also belongs to another TAG at the same time, for example, TAG-2:
   in one case in which the serving cell also belongs to TAG-2, and a timer timeAlignmentTimer-2 associated with TAG-2 is still running, the UE performing no operation;
   in one case in which the serving cell also belongs to TAG-2, and the timer timeAlignmentTimer-2 associated with TAG-2 has stopped running;
      or
   in one case in which the serving cell belongs only to TAG-1, that is, is configured with only one TAG,
   the UE performing one or more of the following operations:
      flushing all HARQ buffers of the serving cell;
      if the serving cell is configured with a PUCCH, notifying an RRC layer of the UE to release the PUCCH;
      if the serving cell is configured with an SRS, notifying the RRC layer of the UE to release the SRS;
         clearing configured downlink assignments and configured uplink grants; and
      clearing a PUSCH resource for semi-persistent CSI reporting.

### Embodiment 2

The difference from Embodiment 1 is that a PUCCH resource configured for a serving cell, an SRS, a downlink assignment, an uplink grant, a PUSCH resource for semi-persistent CSI reporting, or the like is configured on the basis of a TRP.

Here, a configured uplink grant resource is used as an example. That is, in the case that the serving cell is configured with a plurality of TRPs, the serving cell may be configured with a plurality of TAGs. Each TRP may have a corresponding TAG associated therewith. The TA value for each TRP can therefore be determined.

The uplink grant resource configured in the serving cell may also be associated with a corresponding TRP. Association may be direct association. For example, uplink grant resource-1 is used for/corresponds to TRP-1, and uplink grant resource-2 is used for/corresponds to TRP-2. The association may also be indirect association. For example, the TCI state adopted by uplink grant resource-1 belongs to/corresponds to TRP-1, and the TCI state adopted by uplink grant resource-2 belongs to/corresponds to TRP-2. Here, the uplink grant resource may also be associated with the TRP in other manners. Thus, the uplink grant resource is indirectly associated with the TAG.

Alternatively, the uplink grant resource may be directly associated with the TAG. When configuring the serving cell for the UE, the network side explicitly associates the identity of the uplink grant resource configured in the serving cell with the index of the TAG. For example, uplink grant resource-1 belongs to/corresponds to TAG-1, and uplink grant resource-2 belongs to/corresponds to TAG-2.

In the above case, some differences from Embodiment 1 may occur, and a specific implementation manner may be as follows:
For a timer timeAlignmentTimer-1 associated with a TAG (denoted as TAG-1), when the timer expires, the UE may perform the following operations:
1, the UE maintaining an N_{TA} value of TAG-1; and
2, for one or more serving cells belonging to TAG-1, the UE determining whether the serving cell is configured with a plurality of TAGs (for example, configured with both TAG-1 and TAG-2) or the serving cell also belongs to another TAG at the same time, for example, TAG-2:
   in one case (case 1) in which the serving cell also belongs to TAG-2, and a timer timeAlignmentTimer-2 associated with TAG-2 is still running, the UE performing the following operations:
   if the serving cell is configured with a PUCCH and the PUCCH is associated with TAG-1 or TRP-1, notifying the RRC layer of the UE to release the PUCCH associated with TAG-1 or TRP-1;
   if the serving cell is configured with an SRS and the SRS is associated with TAG-1 or TRP-1, notifying the RRC layer of the UE to release the SRS associated with TAG-1 or TRP-1;
   clearing configured downlink assignments associated with TAG-1 or TRP-1, and clearing configured uplink grants associated with TAG-1 or TRP-1; and
   clearing a configured PUSCH resource associated with TAG-1 or TRP-1 and used for semi-persistent CSI reporting,
   where in this case, the UE does not need to flush all HARQ buffers of the serving cell.
   In one case (case 2) in which the serving cell also belongs to TAG-2, and the timer timeAlignmentTimer-2 associated with TAG-2 has stopped running;
      or
   in one case (case 3) in which the serving cell belongs only to TAG-1, that is, configured with only one TAG,
   the UE performing one or more of the following operations:
      flushing all HARQ buffers of the serving cell;
      if the serving cell is configured with a PUCCH, notifying an RRC layer of the UE to release the PUCCH;
      if the serving cell is configured with an SRS, notifying the RRC layer of the UE to release the SRS;
      clearing configured downlink assignments and configured uplink grants; and
      clearing a PUSCH resource for semi-persistent CSI reporting.

During performing of the above operations, if the serving cell is configured with a plurality of TAGs, in the case that the timer timeAlignmentTimer-2 associated with TAG-2 has stopped running (case 2), the PUCCH released by the UE is actually the PUCCH associated with TAG-1 or TRP-1 because the PUCCH associated with TAG-2 or TRP-2 may have been released when the timer timeAlignmentTimer-2 expires before. Similarly, this may be the case for other resources configured for the serving cell, such as the SRS, the downlink assignment, the uplink grant, the PUSCH resource for semi-persistent CSI reporting, or the like.

### Embodiment 3

A difference from Embodiment 2 lies in that processing for case 1 is different, and a specific manner may be as follows:
in one case (case 1) in which the serving cell also belongs to TAG-2, and a timer timeAlignmentTimer-2 associated with TAG-2 is still running, the UE performing the following operations:
if the serving cell is configured with a PUCCH and the PUCCH is associated with TAG-1 or TRP-1, the UE suspending or pausing use of the PUCCH associated with TAG-1 or TRP-1;
if the serving cell is configured with an SRS and the SRS is associated with TAG-1 or TRP-1, the UE suspending or pausing use of the SRS associated with TAG-1 or TRP-1;
the UE suspending or pausing use of configured downlink assignments associated with TAG-1 or TRP-1, and suspending or pausing use of configured uplink grants associated with TAG-1 or TRP-1; and
the UE suspending or pausing use of a configured PUSCH resource which is associated with TAG-1 or TRP-1 and is used for semi-persistent CSI reporting,
where in this case, the UE does not need to flush all HARQ buffers of the serving cell.

In other cases, the operations same as those in Embodiment 1 or 2 may be performed.

### Embodiment 4

Among serving cells, a primary cell (Pcell) of an MCG and a primary SCG cell (Pscell) of an SCG may be referred to as a special cell (Spcell). The MCG is a serving cell group controlled by a master node (MN), and is referred to as a master cell group. The SCG is a serving cell group controlled by a secondary node (SN), and is referred to as a secondary cell group (SCG).

If there is an Spcell among serving cells associated with a TAG, such a TAG may be referred to as a primary timing advance group (PTAG).

If an Spcell is configured with a plurality of TAGs, it can be considered that these TAGs are all PTAGs, that is, there are a plurality of PTAGs.

For a timer timeAlignmentTimer associated with a PTAG, when the timer expires, the UE may perform the following operations:
the UE determining whether there are a plurality of PTAGs or whether an Spcell belongs to a plurality of TAGs,
in one case, if the UE is not configured with a plurality of PTAGs (i.e., the Spcell belongs to only one TAG), or
in one case in which the UE is configured with a plurality of PTAGs, but the timers timeAlignmentTimer associated with the other PTAGs have stopped running,
the UE performing one or more of the following operations for all serving cells:
   flushing HARQ buffers of all the serving cells;
   notifying the RRC layer of the UE to release configured PUCCHs of all the serving cells;
   notifying the RRC layer of the UE to release configured SRSs of all the serving cells;
   clearing configured downlink assignments and configured uplink grants; and
   clearing a PUSCH resource for semi-persistent CSI reporting.

In addition,
when it is considered that all running timers timeAlignmentTimer have expired,
maintaining N_{TA} values of all TAGs

In one case in which the UE is configured with a plurality of PTAGs, but at least one of the timers timeAlignmentTimer associated with the other PTAGs is still running,
the UE only needs to maintain, for the PTAG, the N_{TA} value thereof, and optionally, performs the operations in Embodiments 1 to 3, and in this case, it may be considered that the PTAG is TAG-1 therein.

### Embodiment 5

A difference from Embodiment 4 lies in that if an Spcell is configured with a plurality of TAGs, it may be considered that only one of the TAGs is a PTAG, and the other TAGs may be referred to as primary secondary timing advance groups (PSTAGs).

If the timer timeAlignmentTimer that has expired is associated with the PTAG, the UE may perform one or more of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting.

In addition,
when it is considered that all running timers timeAlignmentTimer have expired,
maintaining N_{TA} values of all TAGs.

If the timer timeAlignmentTimer that has expired is associated with the PSTAG, the UE considers that the PSTAG is TAG-1 in Embodiments 1 to 3, and performs the operations in Embodiments 1 to 3.

A further problem to be solved here is how to identify the PTAG. It may be considered that a TAG of which the value of a TAG identity is a specific value is a PTAG. For example, a TAG of which the value of a TAG identity is 0 is a PTAG. Alternatively, when a network layer configures a TAG, if only a certain TAG attribute is shown, the TAG is a PTAG, or the like. For other TAGs, if an Spcell is included therein, the TAGs may be regarded as PSTAGs.

### Embodiment 6

A difference from Embodiment 4 lies in that if an Spcell is configured with a plurality of TAGs, it may be considered that only one of the TAGs is a PTAG, and the other TAGs may be referred to as PSTAGs.

If the timer timeAlignmentTimer that has expired is associated with the PTAG, the UE may perform the following operations:
the UE determining whether the Spcell is configured with a plurality of TAGs (or determining whether there is a PSTAG), and
in one case in which the Spcell is configured with a plurality of TAGs (i.e., there is a PSTAG), the UE determining further whether timers timeAlignmentTimer associated with other PSTAGs are running.

If the timers timeAlignmentTimer associated with the other PSTAGs are running, the UE may perform the operations in Embodiments 1 to 3, and in this case, it may be considered that the PTAG is TAG-1 in Embodiments 1 to 3.

In another case, if the Spcell is not configured with a plurality of TAGs (i.e., there is no PSTAG), or
the Spcell is configured with a plurality of TAGs (there is a PSTAG) and the timers timeAlignmentTimer associated with the other PSTAGs have stopped running, the UE may perform one or more of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting.

In addition,
when it is considered that all running timers timeAlignmentTimer have expired,
maintaining N_{TA} values of all TAGs.

### Embodiment 7

In addition to Embodiment 6, if the timer timeAlignmentTimer that has expired is associated with the PSTAG, the UE may perform the following operations:
the UE further determining whether the timer timeAlignmentTimer associated with the PTAG is running.

In one case, if the timer timeAlignmentTimer associated with the PTAG is still running, the UE may perform the operations in Embodiments 1 to 3, and in this case, it may be considered that the PSTAG is TAG-1 in Embodiments 1 to 3.

In one case, if the timer timeAlignmentTimer associated with the PTAG has stopped running, the UE may perform one or more of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting.

In addition,
when it is considered that all running timers timeAlignmentTimer have expired,
maintaining N_{TA} values of all TAGs.

### Embodiment 8

In addition to the above embodiments, when the MAC layer of the UE receives, from an upper layer (e.g., the RRC layer) of the UE, an indication indicating the activation of the SCG, the UE determines whether the timer timeAlignmentTimer associated with the PTAG is still running, and if the Spcell is configured with a plurality of TAGs, the UE may further determine whether the timers timeAlignmentTimer associated with the other TAGs to which the Spcell belongs are running. If all the timers timeAlignmentTimer associated with the PTAG and the other TAGs to which the Spcell belongs have stopped running, the UE indicates to the upper layer that a random access procedure is needed for the activation of the SCG. Preferably, the Spcell herein refers to the Pscell.

### Embodiment 9

In a 4-step random access procedure, when the UE receives a timing advance command in a RAR, the timing advance command is used for a corresponding TAG.

If a serving cell in which the UE initiates random access is configured with a plurality of TAGs, the UE needs to determine a TAG for which the timing advance command is used. The serving cell in which the UE initiates random access means that the UE initiates random access on a random access resource of the serving cell.

In a feasible manner, the UE first determines whether a corresponding serving cell is configured with a plurality of TAGs, and if the corresponding serving cell is configured with a plurality of TAGs, the UE determines a corresponding TRP according to an SSB or a CSI-RS selected in the random access procedure, further determines a TAG corresponding to the TRP, and then uses the timing advance command for the determined TAG.

In a 2-step random access procedure, the UE may receive an absolute timing advance command in a MSG B, and when applying the absolute timing advance command, the UE first determines whether a corresponding serving cell is configured with a plurality of TAGs, and if the corresponding serving cell is configured with a plurality of TAGs, the UE determines a corresponding TRP according to an SSB or a CSI-RS selected in the random access procedure, further determines a TAG corresponding to or associated with the TRP, and then uses the absolute timing advance command for the determined TAG.

In the above solution, the UE may determine, upon receiving the timing advance command or the absolute timing advance command, the TAG to which the serving cell belongs, or may determine, when the random access procedure is initiated or when the SSB or the CSI-RS is selected, the TAG to which the serving cell belongs.

Here, the "determining the TAG to which the serving cell belongs" is essentially to determine the TAG associated with the serving cell in the current random access procedure:
if the serving cell is associated with or belongs to only one TAG, the determined TAG is the only one TAG; or
if the serving cell is associated with or belongs to more than one TAG, the UE may determine the corresponding TRP according to the selected SSB or CSI-RS, and further determine the TAG corresponding to or associated with the TRP, where the TAG is the determined TAG associated with the serving cell.

Alternatively, when the random access procedure is initiated and when the SSB or the CSI-RS is selected, the UE determines the corresponding TRP according to the selected SSB or CSI-RS, and further determines the TAG corresponding to or associated with the TRP.

Then, when applying the received timing advance command or absolute timing advance command, the UE may apply the timing advance command or the absolute timing advance command to the determined TAG. The timing of the determination has no substantial effect on the beneficial effects of the solution.

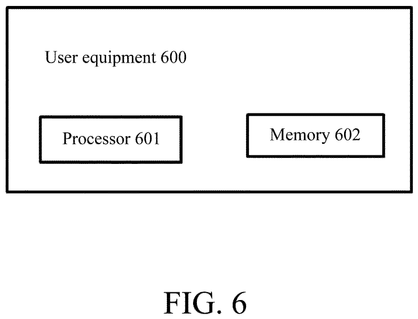

FIG. 6 is a simplified structural block diagram of user equipment according to the present invention.

As shown in FIG. 6, the user equipment 600 includes at least a processor 601 and a memory 602. The processor 601 may include, for example, a microprocessor, a microcontroller, an embedded processor, and the like. The memory 602 may include, for example, a volatile memory (for example, a random access memory (RAM)), a hard disk drive (HDD), a non-volatile memory (for example, a flash memory), or other memory systems. The memory 602 has program instructions stored thereon. When the instructions are run by the processor 601, one or several steps in the processing method for UE of the present disclosure can be performed.

The method and related equipment according to the present disclosure have been described above in conjunction with preferred embodiments. It should be understood by those skilled in the art that the method shown above is only exemplary, and the above embodiments can be combined with one another as long as no contradiction arises. The method of the present invention is not limited to the steps or sequences illustrated above.

The user equipment shown above may include more modules, for example, may also include modules that can be developed or developed in the future and can be used for base stations, MMEs, or UE, and so on. Various identifiers shown above are only exemplary, not for limitation, and the present disclosure is not limited to specific information elements serving as examples of these identifiers. A person skilled in the art could make various alterations and modifications according to the teachings of the illustrated embodiments.

It should be understood that the above embodiments of the present disclosure may be implemented through software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method executed by means of a user equipment, being a method performed during uplink transmission performed by a user equipment (UE) by using one or more transmit/receive points (TRPs) in a serving cell, wherein each serving cell is sorted into a timing advance group (TAG), serving cells having the same timing advance N_{TA} belong to the same TAG, each TAG has its own timer for controlling an effective time of uplink synchronization of a serving cell belonging to the TAG, and the method comprises the following steps:
when a timer associated with a first TAG expires, a UE performing the following operations:
maintaining an N_{TA} value of the first TAG;
for one or more serving cells belonging to the first TAG, the UE determining whether the serving cell also belongs to another TAG at the same time,
if the serving cell also belongs to another TAG and a timer associated with the other TAG is still running, the UE performing no operation,
if the serving cell also belongs to another TAG and a timer associated with the other TAG has stopped running, or if the serving cell belongs to only the first TAG, the UE performing at least one of the following operations:
flushing all HARQ buffers of the serving cell;
if the serving cell is configured with a PUCCH, notifying an RRC layer of the UE to release the PUCCH;
if the serving cell is configured with an SRS, notifying the RRC layer of the UE to release the SRS;
clearing configured downlink assignments and configured uplink grants; and
clearing a PUSCH resource for semi-persistent CSI reporting.

2. The method executed by means of a user equipment according to claim 1, wherein
a PUCCH resource configured for a serving cell, an SRS, a downlink assignment, an uplink grant, or a PUSCH resource for semi-persistent CSI reporting is configured on the basis of a TRP.

3. The method executed by means of a user equipment according to claim 2, further comprising the following steps:
if the serving cell also belongs to another TAG and a timer associated with the other TAG is still running, the UE performing at least one of the following operations:
if the serving cell is configured with a PUCCH and the PUCCH is associated with the first TAG or a first TRP, notifying the RRC layer of the UE to release the PUCCH associated with the first TAG or the first TRP;
if the serving cell is configured with an SRS and the SRS is associated with the first TAG or the first TRP, notifying the RRC layer of the UE to release the SRS associated with the first TAG or the first TRP;
clearing a configured downlink assignment associated with the first TAG or the first TRP, and clearing a configured uplink grant associated with the first TAG or the first TRP; and
clearing a configured PUSCH resource which is associated with the first TAG or the first TRP and is used for semi-persistent CSI reporting.

4. The method executed by means of a user equipment according to claim 2, further comprising the following steps:
if the serving cell also belongs to another TAG and a timer associated with the other TAG is still running, the UE performing at least one of the following operations:
if the serving cell is configured with a PUCCH and the PUCCH is associated with the first TAG or a first TRP, the UE suspending or pausing use of the PUCCH associated with the first TAG or the first TRP;
if the serving cell is configured with an SRS and the SRS is associated with the first TAG or the first TRP, the UE suspending or pausing use of the SRS associated with the first TAG or the first TRP;
the UE suspending or pausing use of a configured downlink assignment associated with the first TAG or the first TRP, and suspending or pausing use of a configured uplink grant associated with the first TAG or the first TRP; and
the UE suspending or pausing use of a configured PUSCH resource which is associated with the first TAG or the first TRP and is used for semi-persistent CSI reporting.

5. The method executed by means of a user equipment according to any one of claims 1 to 4, wherein
if there is a special cell among serving cells associated with a TAG, the TAG is a primary timing advance group (PTAG), wherein the special cell is a primary cell of a master cell group (MCG) or a primary cell of a secondary cell group (SCG).

6. The method executed by means of a user equipment according to claim 5, further comprising the following steps:
if the special cell is configured with a plurality of TAGs, the TAGs are all PTAGs;
when a timer associated with a first PTAG expires, the UE performing the following operations:
the UE determining whether there are a plurality of PTAGs;
if the UE is not configured with a plurality of PTAGs, or if the UE is configured with a plurality of PTAGs, but timers associated with other PTAGs have stopped running, the UE performing at least one of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting;
if the UE is configured with a plurality of PTAGs, but at least one of the timers associated with the other PTAGs is still running, the first PTAG is the first TAG.

7. The method executed by means of a user equipment according to claim 5, further comprising the following steps:
if the special cell is configured with a plurality of TAGs, only one of the TAGs is a PTAG, and the other TAGs are primary secondary timing advance groups (PSTAGs);
if an expired timer is associated with the PTAG, the UE performing at least one of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting;
if an expired timer is associated with a PSTAG, the PSTAG is the first TAG.

8. The method executed by means of a user equipment according to claim 5, further comprising the following steps:
if the special cell is configured with a plurality of TAGs, only one of the TAGs is a PTAG, and the other TAGs are primary secondary timing advance groups (PSTAGs);
if an expired timer is associated with the PTAG, the UE performing the following operations:
the UE determining whether there is a PSTAG;
if there is a PSTAG, the UE further determining whether a timer associated with the PSTAG is still running,
and if the timer associated with the PSTAG is still running, the PTAG is the first TAG;
if there is no PSTAG, or if there is a PSTAG but a timer associated with the PSTAG has stopped running, the UE performing at least one of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting.

9. The method executed by means of a user equipment according to claim 8, further comprising the following steps:
if an expired timer is associated with a PSTAG, the UE performing the following operations:
the UE further determining whether a timer associated with a PTAG is still running;
if the timer associated with the PTAG is still running, the PSTAG is the first TAG;
if the timer associated with the PTAG has stopped running, the UE performing at least one of the following operations for all serving cells:
flushing HARQ buffers of all the serving cells;
notifying the RRC layer of the UE to release configured PUCCHs of all the serving cells;
notifying the RRC layer of the UE to release configured SRSs of all the serving cells;
clearing configured downlink assignments and configured uplink grants; and
clearing a PUSCH resource for semi-persistent CSI reporting.

10. A user equipment, comprising:
a processor; and
a memory, having instructions stored therein,
wherein the instructions, when run by the processor, perform the method according to any one of claims 1 to 9.
